Europäisches Patentamt

**European Patent Office**

Office européen des brevets

(11) Publication number: **0 227 475**
**B1**

## EUROPEAN PATENT SPECIFICATION

(45) Date of publication of the patent specification:
30.05.90

(51) Int. Cl.⁵: **F02B 37/12, F01D 17/16**

(21) Application number: **86310094.7**

(22) Date of filing: **23.12.86**

(54) Variable displacement turbocharger.

(30) Priority: **23.12.85 JP 198517/85**
**25.12.85 JP 199975/85**
**25.12.85 JP 199976/85**
**17.04.86 JP 57923/86**

(43) Date of publication of application:
**01.07.87 Bulletin 87/27**

(45) Publication of the grant of the patent:
**30.05.90 Bulletin 90/22**

(84) Designated Contracting States:
**DE FR GB IT**

(56) References cited:
**DE-C- 1 221 071**
**DE-C- 1 751 813**
**FR-A- 2 569 772**
**GB-A- 775 454**
**GB-A- 820 595**

**PATENT ABSTRACTS OF JAPAN, vol. 9,**
**no. 282 (M-428)[2005], 9th November 1985; & JP - A**
**- 60 125 727 (YANMAR DIESEL) 05-07-1985**
**PATENT ABSTRACTS OF JAPAN, vol. 9,**
**no. 272 (M-425)[1995], 30th October 1985; & JP - A**
**- 60 116 830 (NISSAN) 24-06-1985**

(73) Proprietor: **ISHIKAWAJIMA-HARIMA JUKOGYO**
**KABUSHIKI KAISHA, 2-1, Ote-machi 2-chome,**
**Chiyoda-ku Tokyo 100(JP)**

(72) Inventor: **Shimizu, Masami, No. 4-16-1, Tsuganodai,**
**Chiba-shi Chiba-ken(JP)**
Inventor: **Takagi, Kinshi, No. 2-21-6-505, Shimura,**
**Itabashi-ku Tokyo-to(JP)**
Inventor: **Kondo, Nobuhiro, No. 673-145, Shimizu,**
**Noda-shi Chiba-ken(JP)**
Inventor: **Furukawa, Hiromu, No. 3-4-1, Gontazaka**
**Hodogaya-ku, Yokohama-shi Kanagawa-ken(JP)**

(74) Representative: **Jennings, Nigel Robin et al, KILBURN &**
**STRODE 30 John Street, London WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to turbochargers and is concerned with variable geometry turbochargers of the type comprising a turbine casing, a shroud within the casing and a gas outlet cover connected to the casing, the casing, the shroud and the gas outlet cover together defining a closed annular space and the casing and the shroud together defining a space which accommodates a turbine wheel and which communicates with the gas inlet passage within the casing through an annular passage in which a plurality of nozzle blades are situated, each nozzle blade being rotatably carried by a nozzle shaft and the nozzle shafts being connected by respective links to a nozzle driving ring within the annular space, the driving ring being connected to actuating means outside the space, movement of which results in rotation of the driving ring and thus of the nozzle blades, and the periphery of the driving ring being slidably received in a space defined between the casing and the gas outlet cover.

Turbochargers, which serve to improve the thermal efficiency of various types of prime movers or engines, are driven by the exhaust gases from the engines. The flow rate of exhaust gases from an engine varies depending on the load on the engine so that conventionally part of the performance of the turbocharger is sacrificed. To overcome this problem, variable turbochargers have recently been developed in which the angle of the nozzle blades is varied depending on the load on the engine so as to control the flow rate of exhaust gases flowing to the turbine wheel in an optimum manner, whereby a high degree of thermal efficiency can be maintained at all times.

A variable geometry turbocharger of the generic type referred to above is disclosed in JP-A 60 125 727. GB-A 775 454 discloses a variable geometry turbocharger in which the nozzle blades are connected to be rotated by a common nozzle driving ring which is received in a space between the turbocharger casing and a gas outlet cover but is not in sliding contact with either of them. The nozzle driving ring is radially guided by engagement of its inner periphery with a plurality of circumferentially spaced rotatable rollers.

It is an object of the invention to provide a turbocharger of the type referred to in which the nozzle driving ring is effectively restrained in the axial and radial directions with a high degree of accuracy. A further object of the present invention is to ensure that smooth rotation of the nozzle driving ring can occur at all times without sticking, thereby enabling variation of the angle of the nozzle blades easily and accurately. A further object is to permit the control of the maximum opening angle of the nozzle blades, to prevent contact between the nozzle blades and the turbine wheel. A further object is to avoid contact between the nozzle blades and the shroud and to decrease the friction between the nozzle blades and the bearings. A final object of the present invention is to prevent leakage of exhaust gases from the mechanism for adjusting the angle of the nozzle blades.

According to the present invention a turbocharger of the type referred to above is characterised in that the nozzle driving ring is rotatably supported by and in sliding engagement with one or more stationary projections on the gas outlet cover, the or each projection having a curved sliding contact surface which engages the radially inner peripheral surface of the nozzle driving ring, at least the end portions of the curve of the sliding contact surface having a smaller radius than the radially inner peripheral surface of the nozzle driving ring. This feature ensures that the driving ring is reliably axially retained but may nevertheless rotate freely. The projection or projections may be integral with the gas outlet cover and may constitute a plurality of spaced projections. The external sliding contact surface of the projection or projections may be hardened to minimise wear. Alternatively the projections may constitute separate items connected to the gas outlet cover and in one embodiment there is a plurality of projections, each of which comprise a centering fixture removably connected to the gas outlet cover by means of a countersunk head screw.

As mentioned above, the radius of curvature of at least the end portions of the sliding contact surface of the or each projection is smaller than that of the inner surface of the driving ring. The projections need not be all of the same size nor symmetrically disposed and both the size and disposition of the projections may be such as to produce a uniform contact pressure on all of them. In one embodiment, certain of the projections have larger surfaces than the remainder so as to accommodate the load transmitted from the nozzle driving ring.

The shroud may have one or more protuberances or projections, preferably continuous annular projections, positioned to be engaged by the nozzle blades when they reach a predetermined position. This construction ensures that the nozzle blades cannot come into contact with the turbine wheel. In an alternative embodiment at least one of the centering projections is positioned to be engaged by the nozzle driving ring or a member connected thereto when the nozzle blades have reached a predetermined position.

In one embodiment the nozzle shafts have a uniform diameter over their length and are supported in bearings having an end face which directly contacts the associated nozzle blade. Alternatively or in addition, the side surface of the nozzle blade adjacent the shroud may be inclined away from the shroud to eliminate the risk of contact between the nozzle blades and the shroud.

The leakage of exhaust gas to the atmosphere around the actuating means may be eliminated by supplying compressed air into the annular space through a gas connection or alternatively by providing gas communication between the annular space and the gas outlet.

Further features and details of the invention will be apparent from the following desription of certain specific embodiments which is given by way of example with reference to Figures 1 to 10 of the accompanying drawings, in which:

Figure 1 is an axial sectional view illustrating the major components of a variable displacement turbocharger in accordance with the present invention;

Figure 2 is a transverse sectional view on the line A-A in Figure 1;

Figure 3(A) and 3(B) show two examples of integral centering projections;

Figure 4 is a scrap axial view of a turbocharger. including a plurality of asymmetrical centering projections;

Figure 5 is a view similar to Figure 1 of an embodiment in which the shroud includes a projection limiting the travel of the nozzle blades;

Figure 6 is a view similar to Figure 2, and illustrating an alternative means for limiting the travel of the nozzle blades;

Figure 7 is a scrap enlarged view of a further embodiment;

Figure 8 is a view similar to Figure 1 of a further embodiment;

Figure 9 is a similar view of a further embodiment incorporating means for preventing the leakage of exhaust gases; and

Figure 10 is a scrap view corresponding to the portion B in Figure 9 illustrating alternative means for preventing the leakage of exhaust gases.

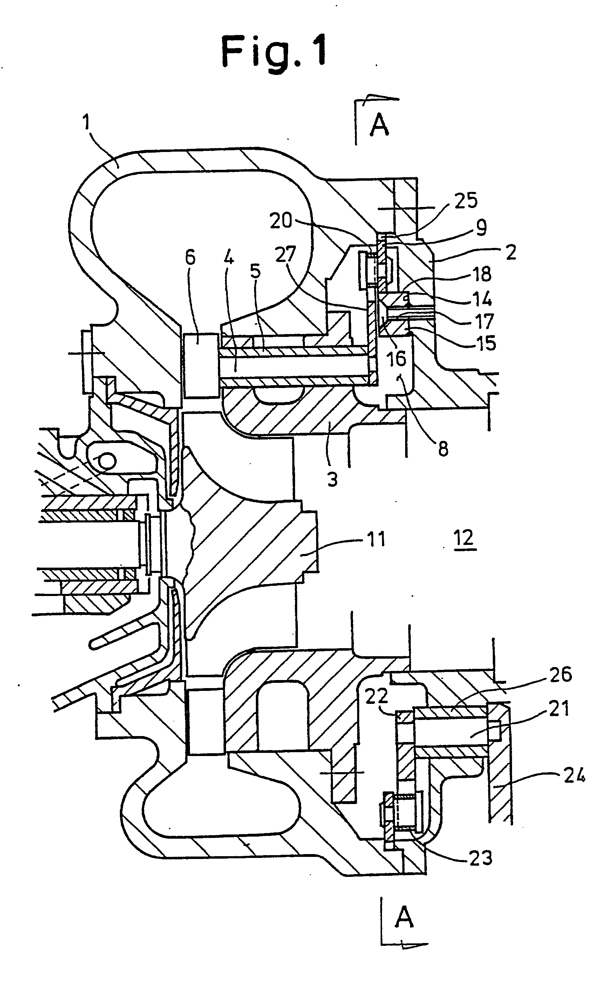

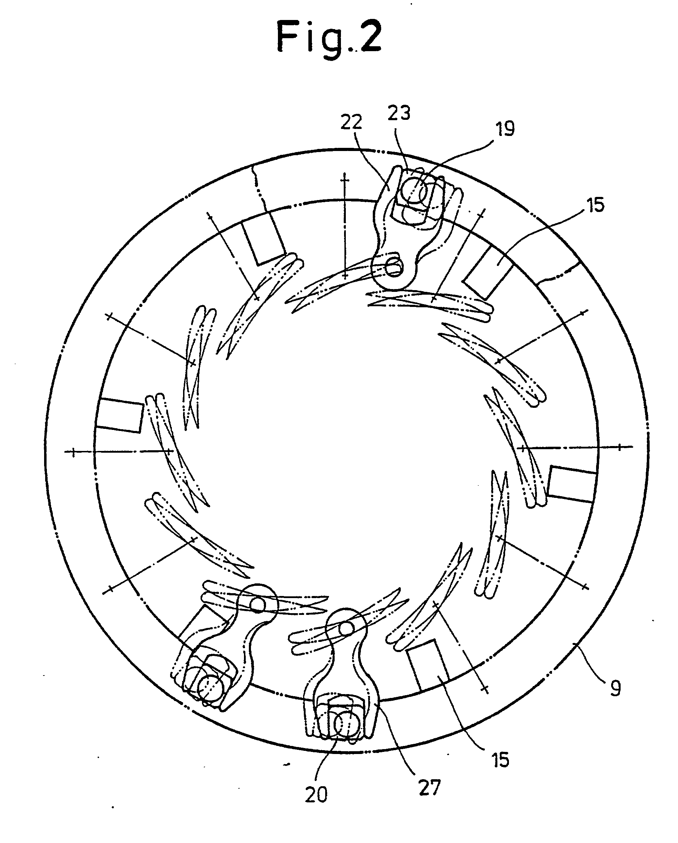

Referring firstly to Figures 1 and 2, the turbocharger includes a turbine casing 1 defining an annular cavity of generally conventional shape, a shroud 3 coaxially disposed within and engaging the casing 1 and a gas outlet cover 2 attached to the turbine casing 1. Within the space defined by the casing 1 and shroud 3 is a turbine wheel 11. The shroud 3 and outlet cover 2 define a gas outlet 12 and the casing 1, shroud 3 and outlet cover 2 define an annular space 8. Circumferentially spaced, axially extending bearings 5 are fitted into the shroud 3 around its periphery. A nozzle shaft 4 is fitted into each bearing 5 and carries at one end a nozzle blade 6 disposed in the restricted passage between the interior of the casing 1 and the space accommodating the turbine wheel. A bifurcated nozzle link 27 is attached to the other end of each nozzle shaft 4 which extends into the space 8. The casing 1 and outlet cover 2 define an annular groove 25 in which the periphery of a nozzle driving ring 9 is slidably accommodated. The outlet cover 2 is formed at an inner surface with a stepped or recessed surface 14 into which centering fixtures 15 are fitted at a predetermined pitch with countersunk-head screws 16. The size of the fixtures 15, the position of the tapped holes 17 for the screws 16 and the position of the step 18 are such that when the centering fixtures are held in position by the screws 16, the centering fixtures 15 are pressed against the step 18 by the tapered surface of the screw heads. If the stepped portion 18 is defined with a high degree of dimensional accuracy, the centering fixtures 15 can be positioned with a high degree of accuracy also.

The inner peripheral surface of the nozzle driving ring 9 slidably contacts the centering fixtures 15 and is thus reliably centered. Thus, the nozzle driving ring 9 is axially and radially positioned by the turbine casing 1, the gas outlet cover 2 and the centering fixtures 15. A dog 20 is rotatably mounted by a pin 19 on the nozzle driving ring 9 and is fitted into the forked leading end of each nozzle link 27.

A shaft 21 passes through a bearing 26 in the gas outlet cover 2 and has a bifurcated driving link 22 securely fixed to its inner end. The forked leading end of the link 22 is engaged with a dog 23 pivotally attached to the nozzle driving ring 9. A lever 24 is attached to the outer end of the shaft 21.

When the lever 24 is pivoted by an external actuator (not shown), the driving link 22 is pivoted by the shaft 21 and rotates the nozzle driving ring 9. This causes pivotal movement of the nozzle links 27 and thus rotation of the nozzle shafts 4, thereby changing the angle of the nozzle blades 6. During this process the nozzle driving ring 9 is restrained radially by the centering fixtures 15 and axially by the groove 25.

The dimensions of the groove 25 and its position can be determined with a high degree of accuracy when the turbine casing and the gas outlet cover are fabricated. The axial clearance between the sides of the groove 25 and the nozzle driving ring 9 can be accurately predetermined and thus the axial restraint of the nozzle driving ring 9 can be maintained very satisfactorily. Thus vibrations due to undesired or excessive play or clearances can be eliminated. Moreover, axial vibratory load of the nozzle driving ring 9 is received not by the links but by the turbine casing 1 and the gas outlet cover 2 so that the turbocharger is highly reliable in operation.

Instead of the centering fixtures 15, each of which is fabricated as a separate component, one or more projections integral with the gas outlet cover may be used. The projections may be in the form of a plurality of column-shaped projections or a continuous circular ring.

There is a possibility that when the nozzle driving ring 9 is driven, the centre of the peripheral or circumferential surface of the ring 9 may deviate from the centre defined by the projection or projections. In order to ensure smooth rotation of the nozzle driving ring 9 even in the above-described off-centre situation, it suffices that the radius of the surface of contact of the projection (especially, the column-shaped projection) is smaller than the radius of the inner peripheral surface of the nozzle driving ring 9.

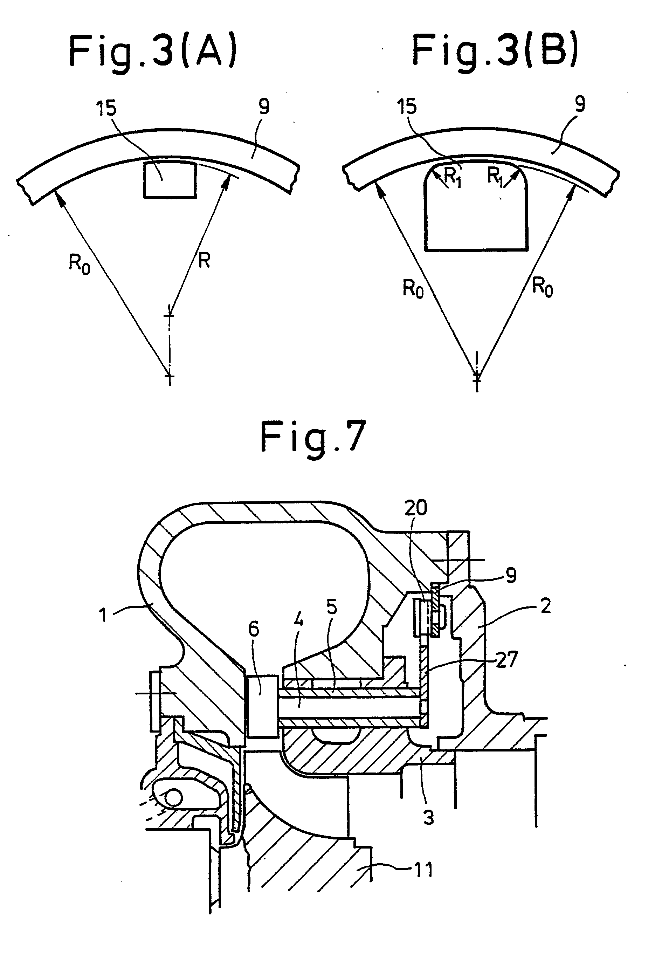

Figure 3(A) shows one possible configuration of such a projection 15. In this case, the relation $R = \alpha R_0$ is maintained where $R$ is the radius of the surface of contact of the projection; $R_0$ is the radius of the inner surface of the nozzle driving ring 9; and $\alpha$ is a coefficient less than 1.

Figure 3(B) shows an alternative configuration in which the projection 15 has a compound surface in which the centre portion of the surface of contact has a radius $R_0$ equal to that of the inner surface of the nozzle driving ring and the end portions have a smaller radius $R_1$.

Since the configurations of the projection are determined in the manner described above, the surfaces of the nozzle driving ring and the projection or projections remain in contact and even if eccentric displacement occurs in the rotation of the nozzle driving ring, galling between the nozzle driving ring and the centering fixtures can be prevented to ensure smooth rotation of the nozzle driving ring for an extended period of time.

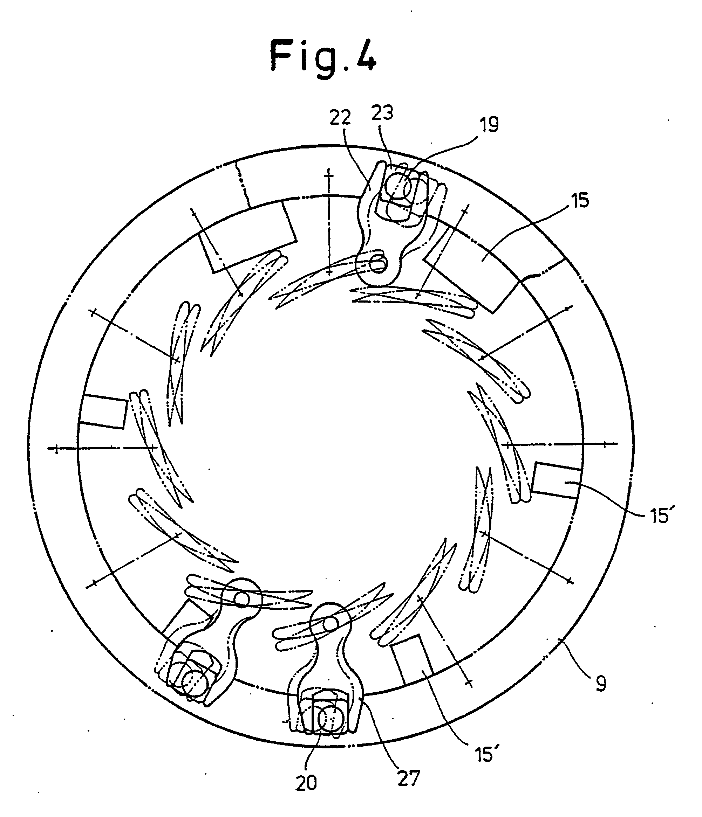

The configuration of the projections can be improved if the surface pressure exerted on them is taken into consideration. Load is not uniformly distributed over the different projections and may differ in dependence on the weight of the nozzle driving ring 9. In the embodiment of Figure 4, the projections are assymetrically disposed with two projections 15 disposed in the direction of the exerted load being wider than the remaining projections 15'. The surface pressure is thus uniformly distributed without increasing the overall frictional resistance between the projections and the nozzle driving ring resulting in a reduction of wear to a minimum. The wear resistance may be further improved by hardening the sliding surface of the projections.

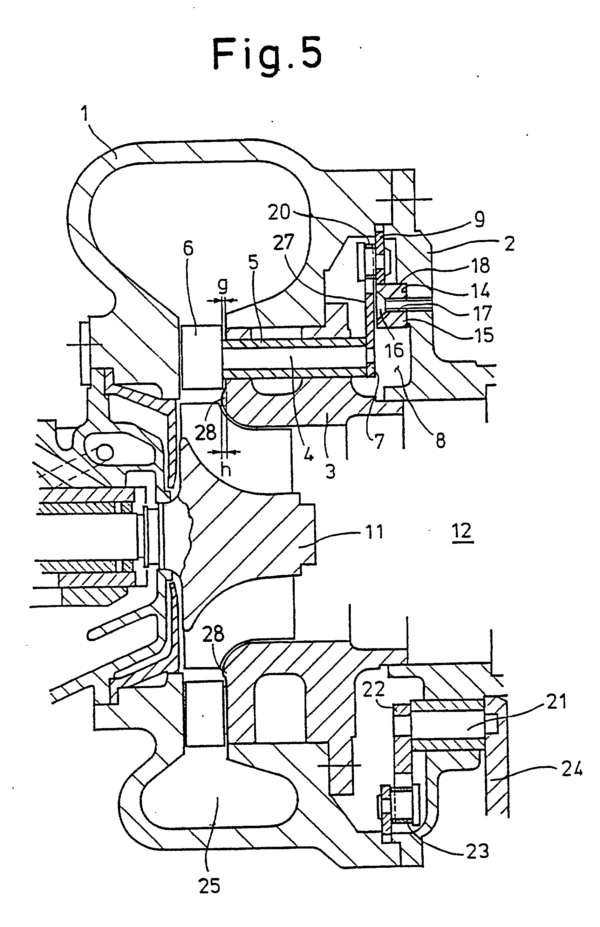

In the embodiment of Figure 5 an annular projection or protuberance 28 is formed on the shroud 3 adjacent to and downstream of the nozzle blades 6 which extends into the passage from the space within the flow passage 25 at the inlet toward the turbine wheel casing 1 to the turbine wheel. The height h of the projection 28 is greater than the width of the gap g between the nozzle blades 6 and the surface of the shroud 3 so that when the nozzle blades are opened to the maximum opening degree, they contact the projection 28 and are prevented from moving any further. The projection 28 is positioned to ensure that the nozzle blades 6 can not contact the turbine wheel 11.

The projection 28 also serves to guide any exhaust gases which may have leaked through the gap g towards the turbine wheel 11 so that the efficiency of guiding the exhaust gases is improved.

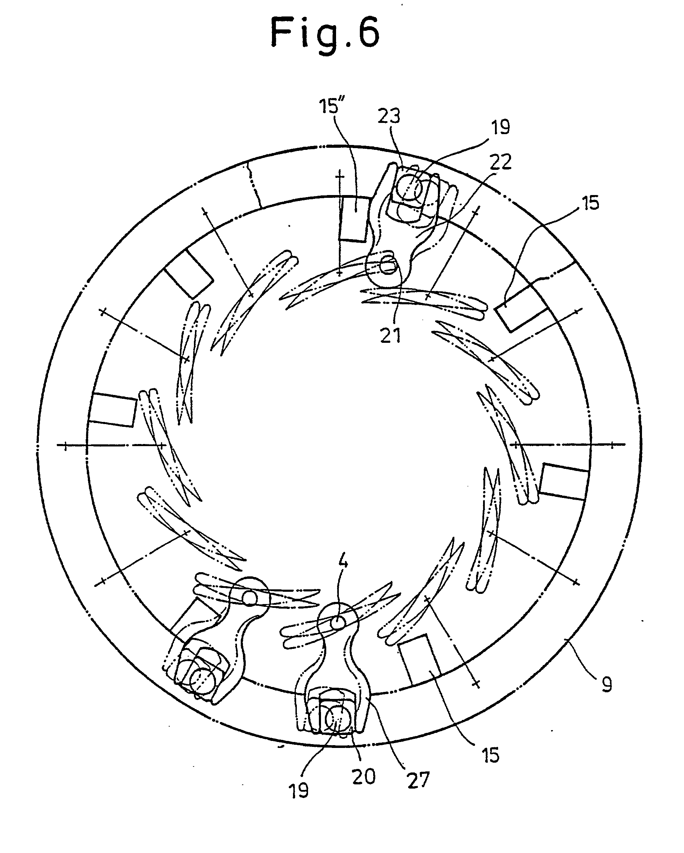

The maximum degree of opening of the nozzle blades 6 is controlled in the embodiment of Figure 6 by the provision of a projection 15" adjacent to the nozzle driving link 22 such that it is engaged by the nozzle driving link 22 when the nozzle blades 6 are opened to the desired maximum. Thus when the nozzle blades 6 are opened to the maximum degree, further movement of the link 22 and thus of the nozzle blades 6 is restrained.

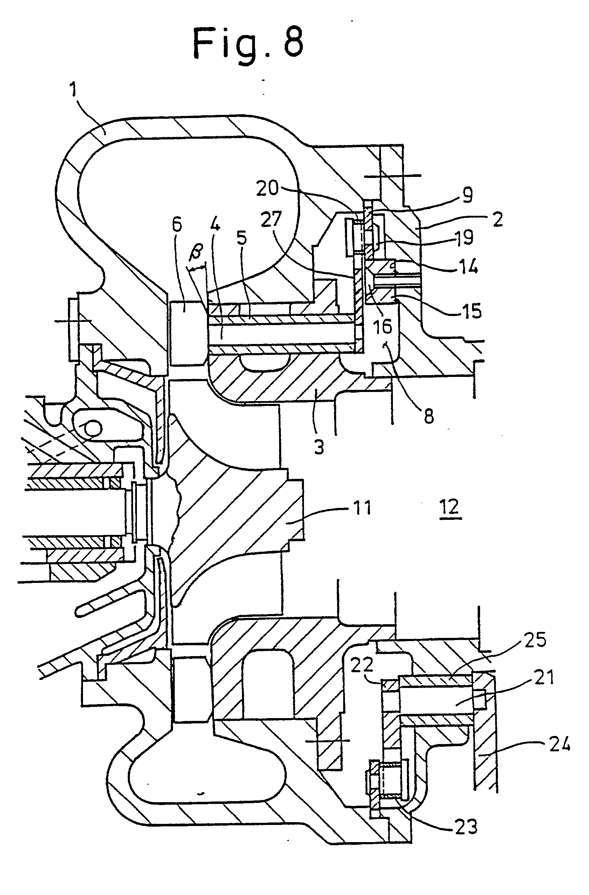

As shown most clearly in Figure 7, the bearings 5 which rotatably support the nozzle shafts 4 are of sufficient length that their end face directly contacts the associated nozzle blade 6. This reduces the area of contact and the wear that results on movement of the nozzle blades.

In the embodiment of Figure 8, the bearings 5 terminate flush with the surface of the shroud 3 in order to prevent contact between the surface of the shroud and the surface of the nozzle blades due to the variation of the gap therebetween. The side surface of the nozzle blades adjacent to the shroud is inclined in the direction away from the surface of the shroud by an angle β thereby defining a gap.

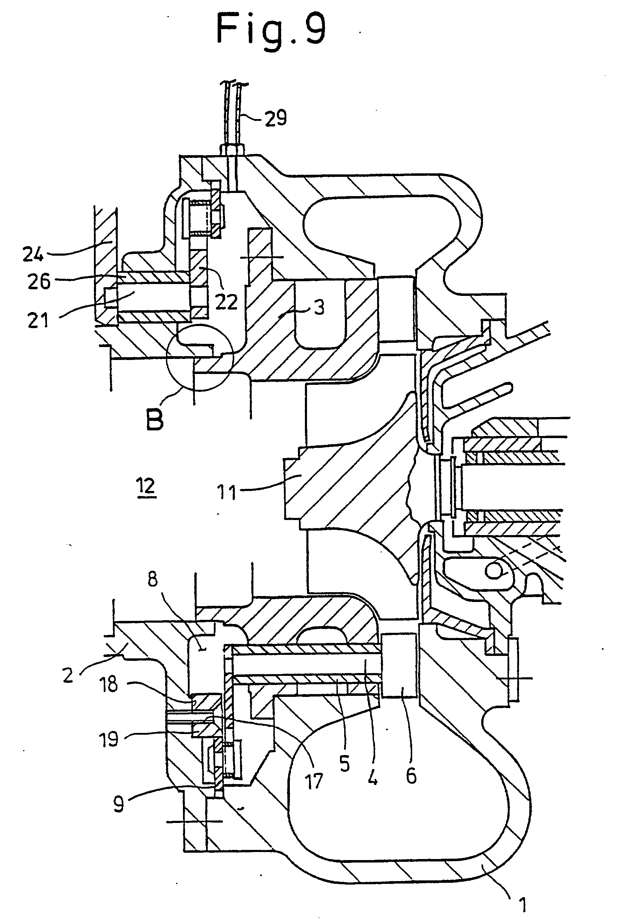

In the embodiment of Figure 9, the space 8 communicates via a hose 29 with a compressed air source (not shown), whereby the pressure in the space 8 is maintained higher than the pressure of the exhaust gases. The air introduced into the space 8 flows through the gap between the gas outlet cover 2 and the shroud 3 toward the exhaust gas outlet 12 so that the mechanism for angularly moving the nozzle blades is cooled by the air. The gas leaking through the space between the bearing 26 and the shaft 21 is thus low-temperature air.

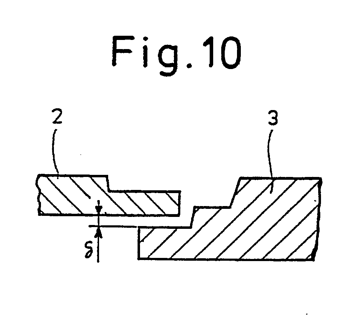

In the embodiment of which only a portion is illustrated in Figure 10, the space 8 communicates with the gas outlet 12. More particularly, at the joint between the shroud 3 and the gas outlet cover 2, the engaging portion of the shroud is decreased in diameter or the gas outlet cover is increased in diameter, whereby a gap δ is defined therebetween. In use, gas within the space 8 therefore flows into the gas outlet 12 in which exhaust gases flow at a high velocity. These exhaust gases produce an ejection action and positively suck the gases through the gap δ. As a result, no exhaust gases leak through the space between the shaft 21 and the bearing 26 to the exterior.

Alternatively, an axial groove or grooves (not shown) may be formed on the engaging portions of either the shroud or the gas outlet cover or a radial through-hole or holes may extend through the shroud or the gas outlet cover.

## Claims

1. A variable geometry turbocharger comprising a turbine casing (1), a shroud (3) within the casing and a gas outlet cover (2) connected to the casing, the casing (1), the shroud (3) and the gas outlet cover (2) together defining a closed annular space (8) and the casing (1) and the shroud (3) together defining a space which accommodates a turbine wheel (11) and which communicates with the gas inlet passage within the casing (1) through an annular passage in which a plurality of nozzle blades (6) are situated, each nozzle blade (6) being rotatably carried by a nozzle shaft (4) and the nozzle shafts (4) being connected by respective links (27) to a nozzle driving ring (9) within the annular space (8), the driving ring (9) being connected to actuating means (21, 24) outside the space (8), movement of which results in rotation of the driving ring (9) and thus of the nozzle blades (6), and the periphery of the driving ring (9) being slidably received in a space defined between the casing (1) and the gas outlet cover (2) characterised in that the nozzle driving ring (9) is rotatably supported by and in sliding engagement with one or more stationary projections (15) on the gas outlet cover (2), the or each projection (15) having a curved sliding contact surface which engages the radially inner peripheral surface of the nozzle driving ring (9), at least the end portions of the curve of the sliding contact surface having a smaller radius ($R_1$, R) than the radially inner peripheral surface of the nozzle driving ring (9).

2. A turbocharger as claimed in claim 1 characterised in that the projections (15) are integral with the gas outlet cover (2).

3. A turbocharger as claimed in claim 1 characterised in that each projection comprises a centering fixture (15) removably connected to the gas outlet cover (2) by means of a countersunk head screw (17).

4. A turbocharger as claimed in claim 1, 2 or 3, characterised in that at least one of the projections (15) is positioned to abut the nozzle driving ring (9) or a member (22) connected thereto when the nozzle blades (6) have reached a predetermined position.

5. A turbocharger as claimed in any one of the preceding claims, characterised in that the radius $(R_0)$ of the sliding contact surface between the end portions is equal to that of the inner peripheral surface of the nozzle driving ring (9).

6. A turbocharger as claimed in any one of claims 1 to 5 characterised by a plurality of projections (15) of which those which, in use, are subjected to a greater proportion of the load transmitted through the nozzle driving ring (9) have a larger surface contacting the nozzle driving ring (9) than the remaining projections (15).

7. A turbocharger as claimed in any one of the preceding claims characterised by one or more protuberances (28) on the shroud positioned to be engaged by the nozzle blades (6) when they reach a predetermined position.

8. A turbocharger as claimed in any one of the preceding claims characterised in that the nozzle shafts (4) have a uniform diameter over their length and are supported in bearings (5) having an end face which directly contacts the associated nozzle blade (6).

9. A turbocharger as claimed in any one of the preceding claims characterised in that the side surface of the nozzle blades (6) adjacent the shroud (3) is inclined away from the shroud (3).

10. A turbocharger as claimed in any one of the preceding claims characterised by a gas connection (29) communicating with the annular space (8) through which, in use, compressed air is introduced into the annular space (8).

11. A turbocharger as claimed in any one of claims 1 to 8 characterised in that the annular space (8) and / the gas outlet (12) are in communication.

**Patentansprüche**

1. Abgasturbolader mit variablem Durchsatz, der ein Turbinengehäuse (1), einen Mantel (3) innerhalb des Gehäuses und einen mit dem Gehäuse verbundenen Abgas-Auslaßdeckel (2) aufweist, wobei das Gehäuse (1), der Mantel (3) und der Abgas-Auslaßdeckel (2) gemeinsam einen geschlossenen Ringraum (8) bestimmen und das Gehäuse (1) und der Mantel (3) gemeinsam einen Raum bestimmen, in dem ein Turbinenrad (11) untergebracht ist und der mit dem Abgas-Einlaßkanal innerhalb des Gehäuses (1) über einen ringförmigen Durchgang in Verbindung steht, in dem eine Vielzahl von Düsenblättern (6) angeordnet sind, von denen jedes mittels einer Welle (4) drehbar ist, wobei die Wellen (4) jeweils über ein zugehöriges Glied (27) mit einem Düseneinstellring (9) innerhalb des Ringraumes (8) und der Einstellring (9) mit einer Betätigungseinrichtung (21, 24) außerhalb des Raumes (8) verbunden sind, deren Bewegung in eine Drehbewegung des Einstellringes (9) und damit der Düsenblätter (6) umgesetzt wird; und wobei der Einstellring (9) mit seinem Umfang verschiebbar in einem Raum zwischen dem Gehäuse (1) und dem Abgas-Auslaßdeckel (2) angeordnet ist, dadurch gekennzeichnet, daß der Düseneinstellring (9) von einem oder mehreren stationären Vorsprüngen (15) auf dem Abgasauslaßdeckel (2) in verdrehbarer Weise getragen wird und auf diesen gleitet, wobei der Vorsprung bzw. jeder Vorsprung (15) eine gekrümmte Gleitfläche hat, die an der in radialer Richtung inneren Umfangsfläche des Düseneinstellringes (9) anliegt, wobei die Krümmung der Gleitfläche zumindest in den Endabschnitten einen kleineren Radius $(R_1, R)$ als die in radialer Richtung innere Umfangsfläche des Düseneinstellringes (9) hat.

2. Abgasturbolader nach Anspruch 1, dadurch gekennzeichnet, daß die Vorsprünge (15) einstückig mit dem Abgasauslaßdeckel (2) ausgebildet sind.

3. Abgasturbolader nach Anspruch 1, dadurch gekennzeichnet, daß jeder Vorsprung (15) lösbar und selbstzentrierend am Abgasauslaßdeckel (2) mit Hilfe einer Senkschraube (17) befestigt ist.

4. Abgasturbolader nach Anspruch 1, 2 oder 3, dadurch gekennzeichnet, daß mindestens einer der Vorsprünge (15) derart positioniert ist, daß er an dem Düseneinstellring (9) oder an einem daran befestigten Element (22) anschlägt, wenn die Düsenblätter (6) eine vorgegebene Stellung erreicht haben.

5. Abgasturbolader nach einem der vorgehenden Ansprüche, dadurch gekennzeichnet, daß der Radius $(R_0)$ der Gleitfläche zwischen den Endabschnitten gleich dem der inneren Umfangsfläche des Düseneinstellrings (9) ist.

6. Abgasturbolader nach einem der Ansprüche 1–5, gekennzeichnet durch eine Vielzahl von Vorsprüngen (15), von denen diejenigen, die im Betrieb einer über den Düseneinstellring (9) übertragenen Mehrbelastung unterworfen sind, eine größere Kontaktfläche mit dem Düseneinstellring (9) aufweisen als die anderen Vorsprünge (15).

7. Abgasturbolader nach einem der vorhergehenden Ansprüche, gekennzeichnet durch einen oder mehrere Höcker (28) auf dem Mantel, die derart angeordnet sind, daß sie in Anlage mit den Düsenblättern (6) kommen, wenn diese eine vorgegebene Stellung erreichen.

8. Abgasturbolader nach einem der vorhergehenden Ansprüche, dadurch gekennzeichnet, daß der Durchmesser der Wellen (4) über ihre Länge hinweg gleichbleibt, und daß die Wellen (4) sich in Lagern (5) befinden, die eine Stirnfläche aufweisen, die direkt das zugehörige Düsenblatt (6) kontaktiert.

9. Abgasturbolader nach einem der vorhergehenden Ansprüche, dadurch gekennzeichnet, daß die Seitenfläche der Düsenblätter (6), welche dem Mantel (3) benachbart ist, sich von dem Mantel (3) weg neigt.

10. Abgasturbolader nach einem der vorhergehenden Ansprüche, gekennzeichnet durch eine Abgasverbindung (29), die mit dem Ringraum (8) in Verbindung steht, durch welchen im Betrieb komprimierte Luft in den Ringraum (8) eingeführt wird.

11. Abgasturbolader nach einem der Ansprüche 1–8, dadurch gekennzeichnet, daß der Ringraum (8) und der Abgasauslaß (12) in Verbindung stehen.

**Revendications**

1. Turbosoufflante à suralimentation et à géométrie variable comprenant un carter de turbine (1), un anneau de renforcement (3) à l'intérieur du carter (1) et un couvercle de sortie des gaz (2) relié au carter, le carter (1), l'anneau de renforcement (3) et le couvercle de sortie des gaz (2) définissant ensemble un espace annulaire fermé (8) et le carter (1) et l'anneau de renforcement (3) définissant ensemble un espace qui reçoit une roue de turbine (11) et qui communique avec le passage d'entrée des gaz à l'intérieur du carter (1) à travers un passage annulaire dans lequel est située une pluralité de pales de tuyère (6), chaque pale de tuyère (6) étant portée en pouvant tourner par un arbre de tuyère (4), et les arbres de tuyère (4) étant reliés par des articulations respectives (27) à une couronne de commande de la tuyère (9) à l'intérieur de l'espace annulaire (8), la couronne de commande (9) étant reliée à des moyens de manœuvre (21, 24) à l'extérieur de l'espace (8), le mouvement de ceux-ci se traduisant par la rotation de la couronne de commande (9), et donc des pales de tuyère (6), et la périphérie de la couronne de commande (9) étant reçue en pouvant glisser dans un espace défini entre le carter (1) et le couvercle de sortie des gaz (2), caractérisée par le fait que la couronne de commande de la tuyère (9) est maintenue en pouvant tourner par un ou plusieurs épaulements fixes (15) qui sont ménagés sur le couvercle de sortie des gaz (2) et avec lesquels elle est en contact glissant, l'épaulement (15) ou chaque épaulement présentant une surface de contact glissant courbe qui vient en prise avec la surface périphérique de la couronne de commande de la tuyère (9) située à l'intérieur dans le sens radial, et au moins les portions extrêmes de la courbe de la surface de contact glissant présentant un rayon ($R_1$, R) inférieur à celui de la surface périphérique de la couronne de commande de la tuyère (9) qui est située à l'intérieur dans le sens radial.

2. Turbosoufflante à suralimentation selon la revendication 1, caractérisée par le fait que les épaulements (15) sont d'un seul tenant avec le couvercle de sortie des gaz (2).

3. Turbosoufflante à suralimentation selon la revendication 1, caractérisée par le fait que chaque épaulement comprend une fixation de centrage (15) reliée de manière amovible au couvercle de sortie des gaz (2) au moyen d'une vis à tête conique (17).

4. Turbosoufflante à suralimentation selon la revendication 1, 2 ou 3, caractérisée par le fait qu'au moins l'un des épaulements (15) est positionné de manière à servir de butée à la couronne de commande de la tuyère (9), ou à un organe (22) relié à celle-ci, lorsque les pales de tuyère (6) ont atteint une position prédéterminée.

5. Turbosoufflante à suralimentation selon l'une quelconque des revendications précédentes, caractérisée par le fait que le rayon ($R_0$) de la surface de contact glissant entre ses portions extrêmes est égal à celui de la surface périphérique intérieure de la couronne de commande de la tuyère (9).

6. Turbosoufflante à suralimentation selon l'une quelconque des revendications 1 à 5, caractérisé par une pluralité d'épaulements (15) dont ceux qui, lors de l'emploi, sont soumis à une plus forte proportion de la charge transmise par l'intermédiaire de la couronne de commande de la tuyère (9) présentent une surface de contact avec la couronne de commande de la tuyère (9) qui est supérieure à celle des épaulements (15) restants.

7. Turbosoufflante à suralimentation selon l'une quelconque des revendications précédentes, caractérisée par une ou plusieurs protubérances (28) ménagées sur l'anneau de renforcement et positionnées de façon à ce que les pales de tuyère (6), lorsqu'elles atteignent une position prédéterminée, viennent en contact avec elles.

8. Turbosoufflante à suralimentation selon l'une quelconque des revendications précédentes, caractérisée par le fait que les arbres de tuyère (4) présentent un diamètre uniforme sur toute leur longueur et qu'ils sont portés dans des paliers (5) présentant une face d'extrémité qui vient directement en contact avec la pale de tuyère associée (6).

9. Turbosoufflante à suralimentation selon l'une quelconque des revendications précédentes, caractérisée par le fait que la surface latérale des pales de tuyère (6) qui est adjacente à l'anneau de renforcement (3) est inclinée en s'éloignant de l'anneau de renforcement (3).

10. Turbosoufflante à suralimentation selon l'une quelconque des revendications précédentes, caractérisée par un raccordement de gaz (29) qui communique avec l'espace annulaire (8) et à travers lequel, lors de l'emploi, de l'air comprimé est introduit dans l'espace annulaire (8).

11. Turbosoufflante à suralimentation selon l'une quelconque des revendications 1 à 8, caractérisée par le fait que l'espace annulaire (8) et la sortie de gaz (12) sont en communication.

# Fig.1

# Fig.2

# Fig.3(A)

# Fig.3(B)

# Fig.7

# Fig.4

# Fig.5

# Fig.6

# Fig. 8

# Fig.9

# Fig.10